# EUROPEAN PATENT SPECIFICATION

(11) **EP 4 453 394 B1**
(45) Date of publication and mention of the grant of the patent: **15.04.2026**
(21) Application number: 22844679.5
(22) Date of filing: 21.12.2022
(51) Int. Cl.: F01N 3/20, F01N 9/00, F01N 11/00

(54) **METHOD AND APPARATUS FOR MONITORING A THERMAL DEGRADATION OF A REDUCING SOLUTION**
VERFAHREN UND VORRICHTUNG ZUR ÜBERWACHUNG DES THERMISCHEN ABBAUS EINER REDUZIERENDEN LÖSUNG
PROCÉDÉ ET APPAREIL POUR SURVEILLER UNE DÉGRADATION THERMIQUE D'UNE SOLUTION RÉDUCTRICE

(30) Priority: 21.12.2021 IT 202100032027
(43) Date of publication of application: 30.10.2024
(73) Proprietor: Errecinque S.r.l., 10079 Mappano (IT)
(72) Inventor: INCARDONA, Mario, 10079 MAPPANO (TO) (IT); BOLZONI, Matteo, 10079 MAPPANO (TO) (IT)
(74) Representative: Studio Torta S.p.A.
(86) International application number: PCT/IB2022/062574
(87) International publication number: WO 2023/119170

(56) References cited:
- DE-A1- 102010 047 416
- US-A1- 2005 207 936
- SCHÜTTE TORSTEN ET AL: "Ablagerungs- und Alterungsverhalten wässriger Harnstofflösung bei selektiver katalytischer Reduktion von Stickoxidemissionen", 15 December 2010 (2010-12-15), Lüneburg, pages 1 - 223, XP055948580, Retrieved from the Internet <URL:https://pub-data.leuphana.de/files/581/Dissertation_Schuette_Schwaerzung.pdf> [retrieved on 20220803]

## Description

### Technical Sector

The present invention concerns a method and an apparatus for monitoring a thermal degradation state of a reducing solution contained within a reservoir, in particular a vehicle, more particularly comprising a compression-ignition engine.

Usually, a vehicle provided with a compression-ignition engine also includes an after-treatment system for the exhaust gases produced by the engine.

In some cases, the system comprises a selective catalytic reduction device, also known by the abbreviation SCR, for reducing harmful nitrogen oxide emissions of the vehicle.

The SCR device in turn comprises an injector of a reducing solution, for example based on urea or ammonia, to spray the exhaust gases with the reducing solution.

The reducing solution absorbs oxygen from the exhaust gases, thus limiting the formation of nitrogen oxides.

Therefore, the vehicle is provided with a reservoir containing the reducing solution to feed the injector.

In addition, the reservoir has an opening in order to be replenished from time to time with a new reducing solution.

Notoriously, the reducing solution contained in the reservoir is subject to thermal degradation or decay; in other words, the efficacy of the reducing solution decreases over time as a function of the temperature of the same solution inside the reservoir.

In addition, the degrading reducing solution tends to decompose into chemical compounds that are potentially harmful for some devices that may come into contact with them.

The higher the temperature, the greater the degradation of the reducing solution.

For this reason, the reducing solution should be replaced when a high thermal degradation is reached.

However, accurately establishing a moment at which it is appropriate or necessary to replace the reducing solution, particularly taking into account any interim replenishments made, is not really straightforward.

This is clearly a critical aspect, since a failure to replace the degraded reducing solution carries the risk of damaging the components in contact with the reducing solution, while a failure to replenish leads to a reduced efficacy of the SCR, with associated damage to the environment.

US2005207936A1 discloses a method for monitoring a thermal degradation of a reagent solution based on an aging factor defined for example as the product of the integral of running time and the temperature of the solution.

DE102010047416 discloses a method for monitoring a thermal degradation of a urea solution based on an aging indicator based on variations of concentration of ammonia in the solution.

### Background of the Invention

Therefore, there is a need to address the critical aspect outlined above, preferably in a simple and cost-effective manner.

Aim of the invention is to satisfy this need.

### Summary of the Invention

According to the invention, the aim is achieved by a method and an apparatus as defined in the independent Claims.

The dependent Claims set forth particular embodiments of the invention.

### Brief Description of the Drawings

For a better understanding of the invention, embodiments will be described in detail below by way of non-limiting example with reference to the accompanying drawings, wherein:
- Figure 1 is a schematic representation of a vehicle comprising an apparatus according to the invention;
- Figure 2 is a function graph expressing an experimental link between a temperature of a reducing solution and a decay time thereof;
- Figure 3 is a function graph expressing a link between the temperature of the reducing solution and a ratio of a reference decay time to the decay time of Figure 2;
- Figure 4 is a block diagram showing steps of a method according to the invention, executable by the apparatus of Figure 1.

### Detailed Description of the Invention

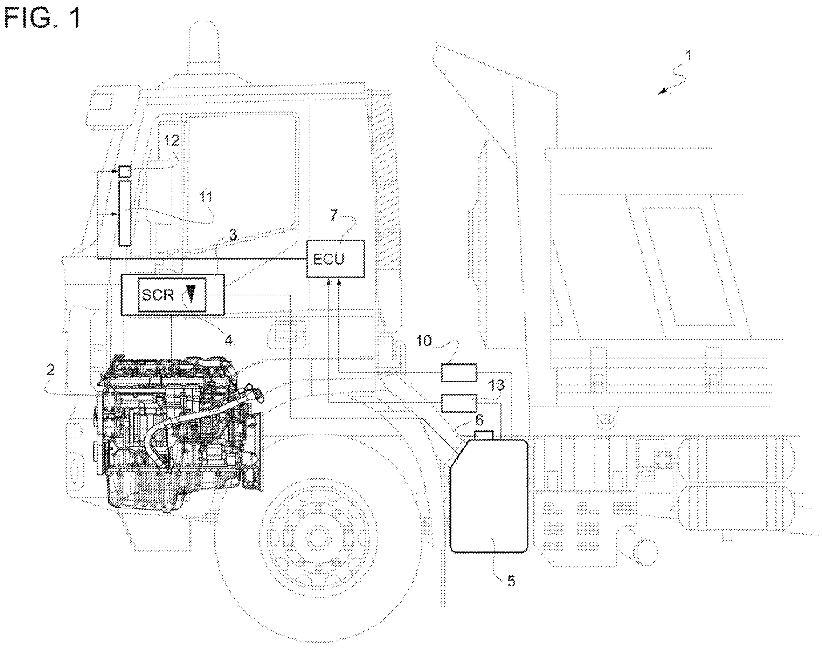

In Figure 1, reference number 1 is used to denote a vehicle as a whole.

The vehicle 1 comprises an engine 2, specifically an internal combustion engine, more precisely of the compression-ignition type, and an after-treatment device 3 configured to treat the exhaust gases of the engine 2.

The after-treatment device 3 comprises an SCR, in turn comprising an injector 4 to deliver a reducing solution, specifically based on urea, on the exhaust gases of the engine 2.

In addition, the vehicle 1 comprises a reservoir 5 for containing the reducing solution; specifically, the reservoir 5 is connected to the injector 4 so as to allow feeding the same with the reducing solution.

The reservoir 5 has a refilling opening 6 selectively closable and suitable to allow replenishing the reservoir 5 with the reducing solution.

Clearly, the refilling opening 6 can also be used to replace the reducing solution already contained in the reservoir 5 with a new reducing solution.

The vehicle 1 also comprises an apparatus for monitoring a thermal degradation state of the reducing solution contained within the reservoir 5.

The apparatus comprises a control unit 7 programmed or configured to perform a method for monitoring the degradation state.

The control unit 7 comprises or stores a first functional relationship or function associating a quantity or variable indicative of a temperature of the reducing solution, for example the same temperature, with a first parameter associated with the thermal degradation state.

More precisely, as implied by the meaning of the term function or functional relationship, the first function or functional relationship associates a value of the quantity indicative of the temperature with a corresponding value of the first parameter.

In general, implicitly or at least in this description, any functional relationship or function associating a quantity with another quantity or parameter, more precisely associates respective values of the quantity and of the other quantity or parameter.

Therefore, in other words, the term quantity could be replaced anywhere in this description by the term value.

In the following, the quantity indicative of the temperature will be defined by the temperature of the reducing solution in the reservoir 5, without losing any generality; clearly, this temperature can be replaced throughout the text by any other quantity indicative of the same.

Conveniently, the quantity is increasing with the indicated temperature, more precisely proportional thereto.

The first parameter, in greater detail, is a decay time of the solution, in the sense that it expresses the elapsing or the evolution of the useful life of the solution.

In other words, the greater the first parameter, i.e. the decay time, the greater the degradation of the solution.

In particular, the decay time is a running time from zero incremented as a function of the temperature in a manner increasing therewith. For example, the running time is determined by the control unit 7 via an internal clock thereof.

In general, the control unit 7 is configured to determine the time, in particular the running, elapsing, or elapsed time, more particularly from an initial instant, for example equal to zero.

More precisely, starting from zero and considering a discretization of time in several next instants, the decay time in a next instant (instant k+1) is obtained by adding an increment to the decay time at the running instant (instant k), wherein the increment is given by a product between an increasing coefficient with the temperature and the time distance between the next instant and the running instant.

In particular, the coefficient is a function of the temperature at the next instant.

Taking a numerical example, the running instant at the beginning (instant zero) corresponds to a null decay time; assuming that the distance between the instants is constantly equal to 10 s, the decay time at the next instant (instant one) will be equal to ten times the value of the coefficient at the next instant, for example 15 s (coefficient 1.5). Thus, at the next instant (instant two), the decay time will be equal to 15 s plus ten times the value of the coefficient at the next instant, for example 25 s (coefficient 1).

From this, it can be deduced directly and unambigously that the coefficient is dimensionless.

All this can of course be transposed into a continuous domain of time considering an infinitesimal distance between next instants. Thus, the first parameter, i.e. the decay time, becomes precisely an integral over time of the product between the time itself and the coefficient, the latter being a generic function of time and an increasing function of temperature.

This makes it possible to derive that the first parameter, i.e. the decay time, is an increasing function of the product between the running time and the coefficient, which in turn is an increasing function of the temperature.

Thus, the first functional relationship may be defined by or otherwise comprise such increasing function of the product between the running time, i.e. the time or the elapsing time or the elapsed time (e.g. from an initial instant) in other words, and the coefficient. However, this is not necessary, so it is optional. For example, the initial instant is equal to zero.

Thus, the control unit 7 performs a method, in particular over time, for monitoring the thermal degradation state of the solution.

Therefore, obtaining the first functional relationship is correlated to obtaining the coefficient.

In greater detail, providing or obtaining the first functional relationship comprises the following steps:
- providing or considering a second functional relationship or function associating the temperature with a second parameter, distinct from the first parameter but also associated with the thermal degradation state,
- providing or considering a reference value of the second parameter associated with a value of the temperature representative of an ambient temperature,
- providing or obtaining a third parameter, specifically defined by the coefficient, which is inversely proportional to the second parameter at least for temperature values that are greater than the ambient temperature and according to a proportionality constant defined by the reference value, and
- providing or obtaining the first functional relationship as an increasing function of the third parameter, that is, of the specific coefficient.

The second parameter is decreasing as the temperature increases, according to the second functional relationship.

For example, the second parameter is a time whereby the reducing solution will reach its useful life end, i.e. a degradation limit state beyond which efficacy is considered unacceptable, assuming that the temperature remains constant throughout said time.

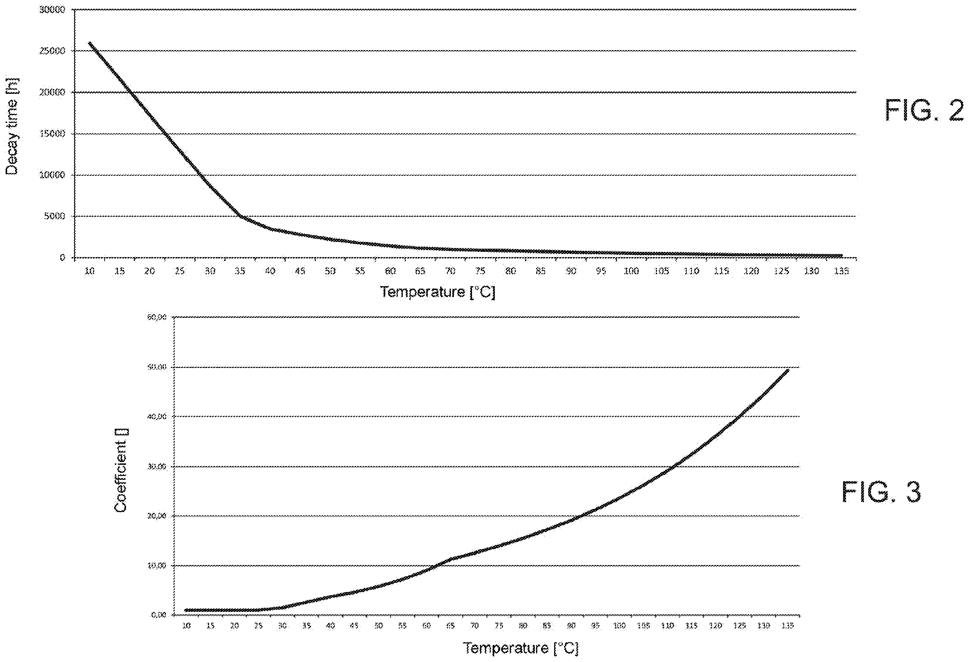

Figure 2 is a graph of the second functional relationship with the temperature in abscissa and the second parameter in ordinate.

The control unit 7 comprises or stores the second functional relationship, which is preferably obtained experimentally.

In the example of Figure 2, the reference value of the second parameter is equal to about 13000 hours corresponding to the ambient temperature equal to 25°C. Thus, the reducing solution would have an unacceptable efficacy after about 13000 hours at ambient temperature equal to 25°C.

Clearly, this is not limiting. The term ambient temperature could refer to any reference temperature of the environment outside the reservoir 5, but preferably it is understood as a temperature between 10°C and 35°C, more preferably equal to 25°C like in the example of Figure 2.

For temperatures higher than or equal to the ambient temperature, the third parameter is the reference value divided by the second parameter. Therefore, since the second parameter is a function of temperature, the third parameter is also a function of temperature.

This could also have been the case for values below ambient temperature, i.e. for all temperature values; however, specifically, the third parameter is constant with respect to temperature and more precisely equal to one for values below ambient temperature.

Figure 3 is a graph showing the third parameter, that is in particular the above coefficient, as a function of temperature. More precisely, the third parameter is reported in the ordinates, while the temperature is reported in the abscissae.

As can be seen in Figure 3, the third parameter is assumed to be equal to one for temperature values below ambient temperature.

In the present case, Figure 3 does not show the first functional relationship. Rather, the latter is based on the coefficient or third parameter, in particular via the product of the coefficient or third parameter and the running time. More particularly, the first functional relationship may coincide with the integral over time of the latter product, as already explained above, possibly calculated in a discretized form.

The further functional relationship associating temperature with the third parameter or with the coefficient is conveniently stored in the control unit 7.

The control unit 7 is configured to acquire the temperature and determine the first parameter as a function of the temperature acquired via the first functional relationship.

In other words, the control unit 7 applies the first functional relationship to the acquired temperature, thus obtaining the first parameter.

To allow acquisition, the apparatus of the vehicle 1 preferably comprises a transducer 10 coupled in particular to the reservoir 5 and more generally configured to acquire the temperature and generate a signal associated with it.

The control unit 7 is coupled to the transducer 10, so as to receive the generated signal; furthermore, the control unit 7 is configured to acquire the signal and then the temperature by extracting it from it.

The control unit 7 is further configured to monitor the degradation state of the reducing solution based on the first determined parameter.

For example, the control unit 7 may establish the degradation state from the first parameter.

Furthermore, the apparatus may preferably comprise a display device 11 for displaying the degradation state or directly the first parameter.

The control unit 7 would control the display device 11 so that it displays the degradation state or directly the first parameter, for example.

Thus a driver of the vehicle 1 could observe the display device 11 and derive the degradation state.

Advantageously, the control unit 7 is configured to determine a critical condition of the degradation state based on the first determined parameter; more precisely, the control unit 7 determines the critical condition when the first parameter satisfies a relationship with a threshold.

In particular, the critical condition is determined when the first parameter exceeds the threshold.

The apparatus may preferably comprise a warning device 12 in order to warn the driver about the critical condition. The control unit 7 would command the issue of a warning, in particular via the warning device 12, when it determines the critical condition.

In particular, the driver learns from the warning that the reducing solution should be completely replaced.

The threshold is stored by the control unit 7 and can preferably be updated by the control unit 7, in particular as a function of replenishments of the reservoir 5, i.e. of the feedings of the reducing solution into the reservoir 5 through the refilling opening 6.

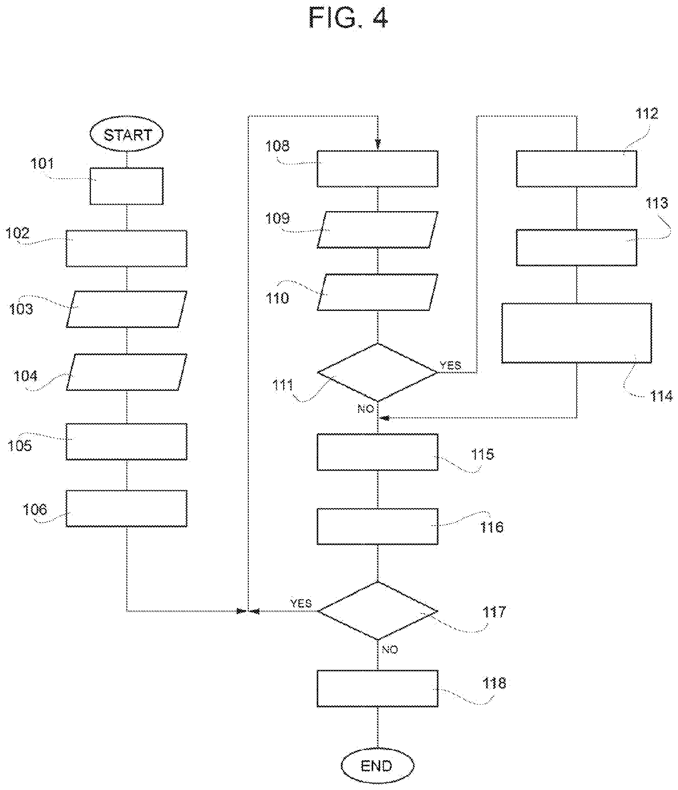

For example, at an initial instant, the threshold is set equal to the reference value of the second parameter (block 101 of Figure 4).

Furthermore, the control unit 7 initializes a counter N, for example by setting it equal to one (block 102 of Figure 4).

The control unit 7 is further configured to determine an occurrence of feeding an additional amount of the solution into the reservoir 5.

In other words, the control unit 7 determines the occurrence of a replenishment of the reducing solution.

The control unit 7 is also configured to determine the additional amount, as well as a base amount already in the reservoir 5 just prior to the feeding of the additional amount.

This can happen in many ways. For example, the apparatus comprises a level sensor 13 configured to detect a solution level in the reservoir 5. The control unit 7 is coupled to the level sensor 13 so as to acquire the detected solution level. Thus, the control unit 7 determines the base amount from the solution level prior to feeding and the additional amount by subtracting the solution level prior to feeding to the solution level after feeding.

In this case, the control unit 7 determines the occurrence of feeding indirectly when it evaluates that the acquired solution level has increased.

The amounts can be determined by the solution level by knowing the dimensions of the reservoir 5. The control unit 7 can store these dimensions and calculate the amounts based on the stored dimensions and on the acquired solution levels.

Otherwise, the apparatus could have comprised alternatively or in addition to the sensor 12 other sensors, such as a sensor adapted to directly measure an amount fed into the reservoir 5, in particular via the refilling opening 6.

Thus, at the initial instant, the control unit 7 can acquire the solution level or the corresponding current solution amount and possibly the temperature in association with the initial value of the counter N (blocks 103, 104 of Figure 4: the order of the blocks is irrelevant).

Then, the control unit 7 calculates the coefficient based on the acquired temperature, in association with the initial value of the counter N (block 105 of Figure 4).

Preferably, the control unit 7 calculates the first parameter, in association with the initial value of the counter N by multiplying the coefficient to the running time (block 106 of Figure 4), which is meanwhile passed from zero to the value of a sampling time, for example one minute. Then, the initial value of the counter N is associated with the next instant with respect to the initial one. Alternatively, the first parameter can be set to zero, considering the running time equal to zero in association with the initial value of the counter N.

Here, the control unit 7 increments the counter to the next value (block 108 of Figure 4).

At this point, the control unit 7 acquires the solution level or the corresponding current solution amount and possibly the temperature in association with the next value of the counter N (blocks 109, 110 of Figure 4: the order of the blocks is irrelevant).

If the acquired solution level at the next value of the counter N is higher than the acquired solution level at the previous value of the counter N (block 111 of Figure 4, output YES), the control unit 7 determines the occurrence of feeding.

The same would clearly be the case if the current solution amount increases in the passage of the value of the counter N from the previous to the next one.

When it determines the occurrence of feeding, the control unit 7 is configured to update the threshold as a function of the additional amount and of the base amount, which in turn can be determined based on the solution levels or on the trend over time of the current solution amount.

In particular, the control unit 7 determines a first value indicative of (more precisely equal to) the base amount divided by the sum of the base amount and of the additional amount (block 112 of Figure 4), i.e. the total amount in the reservoir 5 just after the occurrence of feeding.

In other words, the control unit 7 determines a first value indicative of (more precisely equal to) the amount of the reducing solution in the reservoir 5 prior to the replenishment, referred to a total amount of the reducing solution in the reservoir at the end of the replenishment.

In addition, the control unit 7 determines a second value indicative of (more precisely equal to) the additional amount divided by the sum of the base amount and of the additional amount (block 113 of Figure 4).

In other words, the control unit 7 determines a second value indicative of (more precisely equal to) the amount of the reducing solution fed into the reservoir 5 during the replenishment, referred to the total amount of the reducing solution in the reservoir 5 at the end of the replenishment.

The first and second values can be expressed as a percentage.

Thus, the update of the threshold (block 114 of Figure 4) comprises a multiplication of the not yet updated, and therefore running, threshold by the sum of the first and second values.

Furthermore, preferably, the update also comprises subtracting a product between the first value and a multiplicative factor to the just mentioned multiplication, wherein the multiplicative factor is indicative of a time elapsed between the currently determined occurrence of feeding and the just preceding one. Clearly, if the currently determined occurrence of feeding was the first one from the initial instant, the elapsed time would start from zero.

In addition, optionally, the update also comprises adding an additive value to the multiplication, wherein the additive value is indicative of the time elapsed from zero until the currently determined occurrence of feeding. Specifically, the additive value is the first parameter. Alternatively, the first parameter may be zeroed during the threshold update, whereby the sum of the additive value is no longer executed.

In this way, the control unit 7 takes into account that the reducing solution in the reservoir 5 is renewed, despite still comprising the degraded base amount. The above subtraction takes precisely account of the deterioration of the base amount.

Then, after updating the threshold, the control unit 7 calculates the coefficient based on the acquired temperature, in association with the next value of the counter N (block 115 of Figure 4).

The above (blocks 112-114 of Figure 4) is performed if the occurrence of feeding is determined. Otherwise (output NO of block 111 of Figure 4), the control unit 7 moves on directly to calculate the coefficient (block 115 of Figure 4).

From here, the control unit 7 updates the first parameter by adding to the running time the product of the coefficient and of the sampling time (block 116 of Figure 4).

Now, the control unit 7 compares the first updated parameter with the updated threshold (block 117 of Figure 4).

If the first updated parameter is lower than or equal to the updated threshold (output YES of block 117), the control unit 7 moves on again and increments the counter N (block 108 of Figure 4). Otherwise (output NO of block 118), the control unit 7 determines the critical condition (block 119 of Figure 4).

It is worth reminding that Figure 4 shows a particular non-limiting example of a method for monitoring the reducing solution, in particular over time; furthermore, all the steps represented by the blocks are to be considered as described independently of each other, whereby each of the blocks could be removed or replaced.

In summary, the control unit 7 is configured to perform the following steps of the monitoring method:
a) providing the first functional relationship,
b) acquiring the quantity, specifically the temperature of the reducing solution, and
c) determining the first parameter as a function of the acquired quantity via the first functional relationship.

The degradation state is monitored based on the first determined parameter. In general, the method also comprises the steps of:
d) determining the critical condition based on the first determined parameter, and more preferably
e) commanding the issue of a warning to the driver when the critical condition is determined.

The critical condition is determined when the first parameter satisfies a relationship with a threshold. In addition, further steps of the method could be:
f) determining the occurrence of feeding the additional amount of the solution into the reservoir,
g) determining the additional amount fed into the reservoir,
h) determining the base amount of the solution already in the reservoir just prior to the feeding of the additional amount, and
i) updating the threshold as a function of the determined additional amount and base amount.

From the foregoing, the advantages of the method and apparatus described above are evident.

The apparatus and the method allow a quantitative, reliable and, above all, repeatable evaluation of the degradation state of the reducing solution.

In this way, the driver can replenish or replace the reducing solution in the most appropriate moment, without risking inefficacy of the solution or waste.

In the case of replenishments, the method and the apparatus take into account the presence of the base amount, so that the evaluation of the degradation continues to be objective and reliable. In particular, the useful life of the reducing solution is not equal to that of a completely replaced solution but decreases as the base amount increases compared to the additional amount.

Finally, it is clear that modifications and variations can be made to the apparatus and method according to the invention without, however, departing from the scope of protection defined by the Claims.

For example, the apparatus could also operate outside the context of the vehicle 1.

In addition, the threshold could also be fixed; in this case, the first parameter would be variable as a function of the replenishments in a manner corresponding to what described. That is, the first parameter would be decreased as the threshold is increased as a function of the feeding of fresh reducing solution.

Similarly, the specific mathematical operations performed in updating the threshold could be different from those described in detail here, provided that the final result is still the same.

## Claims

1. A method for monitoring a thermal degradation state of a reducing solution contained within a reservoir (5), the method comprising the steps of
a) providing a first functional relationship associating a first value indicative of a temperature of the solution with a first parameter associated with the thermal degradation state,
b) acquiring (104, 109) the first value, and
c) determining (106, 116) the first parameter as a function of the acquired first value via the first functional relationship,
wherein the degradation state is monitored based on the first determined parameter,
**characterized in that** the first parameter is a decay time of the solution,
and wherein the first functional relationship comprises an increasing function of a product between running time and an increasing coefficient with said first value,
and wherein step a) comprises
- providing (105, 115) a second functional relationship associating the first value with a second parameter associated with the thermal degradation state, such that the second parameter is decreasing as the first value increases, and
- providing a reference value of the second parameter, the reference value being associated with an ambient temperature,
- providing a third parameter inversely proportional to the second parameter, at least for temperature values of the solution greater than said ambient temperature, according to a proportionality constant defined by said reference value, and
providing the first functional relationship as an increasing function of the third parameter, wherein said coefficient is the third parameter.

2. The method according to Claim 1, further comprising the step of
d) determining (119) a critical condition of the degradation state based on the determined first parameter, and
wherein the critical condition is determined when the first parameter satisfies a relationship with a threshold.

3. The method according to Claim 2, further comprising the step of
e) commanding an issue of a warning to a user when the critical condition is determined.

4. The method according to Claim 2 or 3, further comprising the steps of
f) determining (111) an occurrence of feeding an additional amount of the solution into the reservoir,
g) determining the additional amount fed into the reservoir,
h) determining a base amount of the solution already in the reservoir just prior to the feeding of the additional amount, and
i) updating (114) the threshold as a function of the determined additional amount and base amount.

5. The method according to Claim 4, wherein step i) comprises a multiplication of the threshold by a sum of a second and a third value, wherein
- the second value is indicative of a ratio of the base amount to a further sum of the base amount and the additional amount, and
- the third value is indicative of a further ratio of the additional amount to the further sum.

6. The method according to Claim 5, wherein step i) further comprises a subtraction of a product between the second value and a multiplicative factor to said multiplication, the multiplicative factor being indicative of an elapsed time up to the occurrence determined in step f) from a last occurrence of feeding prior to the occurrence of feeding determined in step f), or from zero in case of absence of said last occurrence of feeding.

7. The method according to Claim 5 or 6, wherein step i) further comprises a sum of an additive value to the multiplication, the additive value being indicative of a further elapsed time from zero until the occurrence of feeding determined in step f).

8. The method according to Claim 7, wherein the additive value is equal to the further time incremented as a function of the acquired first value, in an increasing manner as the acquired first value increases, wherein the acquired first value is increasing with the temperature.

9. The method according to any one of the preceding Claims, wherein the decay time is a running time from zero incremented as a function of the acquired first value, in an increasing manner as the acquired first value increases, wherein the acquired first value is increasing with the temperature of the solution.

10. The method according to claim any one of the preceding Claims, wherein the second parameter is a time whereby the reducing solution reaches the end of useful life.

11. The method according to any of the preceding Claims, wherein said coefficient is dimensionless.

12. An apparatus for monitoring a thermal degradation state of a reducing solution contained within a reservoir (5), the apparatus comprising a control unit (7) programmed to carry out the method according to any one of the preceding Claims.

## Patentansprüche

1. Verfahren zur Überwachung eines thermischen Abbauzustandes einer reduzierenden Lösung, die in einem Reservoir (5) enthalten ist, wobei das Verfahren die folgenden Schritte umfasst
a) Bereitstellen einer ersten funktionellen Beziehung, die einen ersten Wert, der eine Temperatur der Lösung anzeigt, mit einem ersten Parameter verknüpft, der mit dem Zustand des thermischen Abbaus verbunden ist,
b) Erfassen (104, 109) des ersten Wertes und
c) Bestimmen (106, 116) des ersten Parameters in Abhängigkeit von dem erfassten ersten Wert über die erste funktionelle Beziehung,
wobei der Abbauzustand auf der Grundlage des ersten bestimmten Parameters überwacht wird,
**dadurch gekennzeichnet, dass** der erste Parameter eine Verfallszeit der Lösung ist,
und wobei die erste funktionelle Beziehung eine zunehmende Funktion eines Produkts aus Laufzeit und einem zunehmenden Koeffizienten mit dem ersten Wert umfasst,
und wobei Schritt a) umfasst
- Bereitstellen (105, 115) einer zweiten funktionellen Beziehung, die den ersten Wert mit einem zweiten Parameter verknüpft, der mit dem thermischen Abbauzustand verbunden ist, so dass der zweite Parameter abnimmt, wenn der erste Wert zunimmt, und
- Bereitstellen eines Referenzwertes des zweiten Parameters, wobei der Referenzwert mit einer Umgebungstemperatur verbunden ist,
- Bereitstellen eines dritten Parameters, der mindestens für Temperaturwerte der Lösung, die über der Umgebungstemperatur liegen, umgekehrt proportional zum zweiten Parameter ist, entsprechend einer durch den Referenzwert definierten Proportionalitätskonstante, und
- Bereitstellen der ersten funktionellen Beziehung als eine zunehmende Funktion des dritten Parameters, wobei der Koeffizient der dritte Parameter ist.

2. Verfahren nach Anspruch 1, ferner umfassend den Schritt
d) Bestimmen (119) eines kritischen Zustands des Abbauzustandes auf der Grundlage des bestimmten ersten Parameters und
wobei der kritische Zustand bestimmt wird, wenn der erste Parameter eine Beziehung zu einem Schwellenwert erfüllt.

3. Verfahren nach Anspruch 2, ferner umfassend den Schritt
e) Befehlen der Ausgabe einer Warnung an einen Benutzer, wenn der kritische Zustand bestimmt ist.

4. Verfahren nach Anspruch 2 oder 3, ferner umfassend die folgenden Schritte
f) Bestimmen (111) eines Ereignisses, bei dem eine zusätzliche Menge der Lösung in das Reservoir eingespeist wird,
g) Bestimmen der zusätzlichen Menge, die in das Reservoir eingespeist wird,
h) Bestimmen einer Grundmenge der Lösung, die sich bereits in dem Reservoir befindet, unmittelbar vor dem Einspeisen der zusätzlichen Menge und
i) Aktualisieren (114) des Schwellenwerts in Abhängigkeit von der bestimmten zusätzlichen Menge und der Grundmenge.

5. Verfahren nach Anspruch 4, wobei Schritt i) eine Multiplikation des Schwellenwertes mit einer Summe aus einem zweiten und einem dritten Wert umfasst, wobei
- der zweite Wert ein Verhältnis der Grundmenge zu einer weiteren Summe aus der Grundmenge und der zusätzlichen Menge angibt, und
- der dritte Wert ein weiteres Verhältnis der zusätzlichen Menge zu der weiteren Summe angibt.

6. Verfahren nach Anspruch 5, wobei Schritt i) ferner eine Subtraktion eines Produkts aus dem zweiten Wert und einem Multiplikationsfaktor zu der Multiplikation umfasst, wobei der Multiplikationsfaktor eine verstrichene Zeit bis zu dem in Schritt f) bestimmten Ereignis von einem letzten Einspeisungsereignis vor dem in Schritt f) bestimmten Einspeisungsereignis oder von Null im Falle des Nichteintretens des letzten Einspeisungsereignisses angibt.

7. Verfahren nach Anspruch 5 oder 6, wobei Schritt i) ferner eine Summe eines additiven Werts zur Multiplikation umfasst, wobei der additive Wert eine weitere verstrichene Zeit von Null bis zum Eintreten der in Schritt f) bestimmten Einspeisung angibt.

8. Verfahren nach Anspruch 7, wobei der additive Wert gleich der weiteren Zeit ist, die in Abhängigkeit von dem erfassten ersten Wert in zunehmender Weise erhöht wird, wenn der erfasste erste Wert zunimmt, wobei der erfasste erste Wert mit der Temperatur zunimmt.

9. Verfahren nach einem der vorstehenden Ansprüche, wobei die Verfallszeit eine Laufzeit von Null ist, die in Abhängigkeit vom erfassten ersten Wertes in zunehmender Weise erhöht wird, wenn der erfasste erste Wert zunimmt, wobei der erfasste erste Wert mit der Temperatur der Lösung zunimmt.

10. Verfahren nach einem der vorstehenden Ansprüche, wobei der zweite Parameter eine Zeit ist, bei der die reduzierende Lösung das Ende der Nutzungsdauer erreicht.

11. Verfahren nach einem der vorstehenden Ansprüche, wobei der Koeffizient dimensionslos ist.

12. Vorrichtung zum Überwachen eines thermischen Abbauzustandes einer reduzierenden Lösung, die in einem Reservoir (5) enthalten ist, wobei die Vorrichtung eine Steuereinheit (7) umfasst, die so programmiert ist, dass sie das Verfahren nach einem der vorstehenden Ansprüche durchführt.

## Revendications

1. Procédé de surveillance d'un état de dégradation thermique d'une solution réductrice contenue dans un réservoir (5), le procédé comprenant les étapes suivantes
a) la fourniture d'une première relation fonctionnelle associant une première valeur indicative d'une température de la solution à un premier paramètre associé à l'état de dégradation thermique,
b) l'acquisition (104, 109) de la première valeur, et
c) la détermination (106, 116) du premier paramètre en fonction de la première valeur acquise via la première relation fonctionnelle,
dans lequel l'état de dégradation est surveillé sur la base du premier paramètre déterminé,
**caractérisé en ce que** le premier paramètre est un temps de décroissance de la solution,
et dans lequel la première relation fonctionnelle comprend une fonction croissante d'un produit entre le temps de fonctionnement et un coefficient croissant avec ladite première valeur,
et dans lequel l'étape a) comprend
- la fourniture (105, 115) d'une deuxième relation fonctionnelle associant la première valeur à un deuxième paramètre associé à l'état de dégradation thermique, de sorte que le deuxième paramètre diminue à mesure que la première valeur augmente, et
- la fourniture d'une valeur de référence du deuxième paramètre, la valeur de référence étant associée à une température ambiante,
- la fourniture d'un troisième paramètre inversement proportionnel au deuxième paramètre, au moins pour des valeurs de température de la solution supérieures à ladite température ambiante, selon une constante de proportionnalité définie par ladite valeur de référence, et
- la fourniture de la première relation fonctionnelle en tant que fonction croissante du troisième paramètre, dans lequel ledit coefficient est le troisième paramètre.

2. Procédé selon la revendication 1, comprenant en outre les étapes suivantes
d) la détermination (119) d'un état critique de l'état de dégradation sur la base du premier paramètre déterminé, et
dans lequel l'état critique est déterminé lorsque le premier paramètre satisfait à une relation avec un seuil.

3. Procédé selon la revendication 2, comprenant en outre l'étape suivante
e) la commande d'une émission d'un avertissement pour un utilisateur lorsque l'état critique est déterminé.

4. Procédé selon la revendication 2 ou 3, comprenant en outre les étapes suivantes
f) la détermination (111) d'une occurrence d'introduction d'une quantité supplémentaire de la solution dans le réservoir,
g) la détermination de la quantité supplémentaire introduite dans le réservoir,
h) la détermination d'une quantité de base de la solution déjà présente dans le réservoir juste avant l'introduction de la quantité supplémentaire, et
i) la mise à jour (114) du seuil en fonction de la quantité supplémentaire et de la quantité de base déterminées.

5. Procédé selon la revendication 4, dans lequel l'étape i) comprend une multiplication du seuil par une somme d'une deuxième et d'une troisième valeur, dans lequel
- la deuxième valeur est indicative d'un rapport entre la quantité de base et une autre somme de la quantité de base et de la quantité supplémentaire, et
- la troisième valeur est indicative d'un autre rapport entre la quantité supplémentaire et l'autre somme.

6. Procédé selon la revendication 5, dans lequel l'étape i) comprend en outre une soustraction d'un produit entre la deuxième valeur et un facteur multiplicatif de ladite multiplication, le facteur multiplicatif étant indicatif d'un temps écoulé jusqu'à l'occurrence déterminée à l'étape f) à partir d'une dernière occurrence d'introduction avant l'occurrence d'introduction déterminée à l'étape f), ou à partir de zéro en cas d'absence de ladite dernière occurrence d'introduction.

7. Procédé selon la revendication 5 ou 6, dans lequel l'étape i) comprend en outre une somme d'une valeur additive à la multiplication, la valeur additive étant indicative d'un temps écoulé supplémentaire de zéro jusqu'à l'occurrence de l'introduction déterminée à l'étape f).

8. Procédé selon la revendication 7, dans lequel la valeur additive est égale au temps supplémentaire incrémenté en fonction de la première valeur acquise, de manière croissante à mesure que la première valeur acquise augmente, dans lequel la première valeur acquise augmente avec la température.

9. Procédé selon l'une quelconque des revendications précédentes, dans lequel le temps de décroissance est un temps s'écoulant à partir de zéro incrémenté en fonction de la première valeur acquise, de manière croissante à mesure que la première valeur acquise augmente, dans lequel la première valeur acquise augmente avec la température de la solution.

10. Procédé selon l'une quelconque des revendications précédentes, dans lequel le deuxième paramètre est un temps pendant lequel la solution réductrice atteint la fin de sa durée de vie utile.

11. Procédé selon l'une quelconque des revendications précédentes, dans lequel ledit coefficient est sans dimension.

12. Appareil pour la surveillance d'un état de dégradation thermique d'une solution réductrice contenue dans un réservoir (5), l'appareil comprenant une unité de commande (7) programmée pour réaliser le procédé selon l'une quelconque des revendications précédentes.
